# EUROPEAN PATENT SPECIFICATION

(11) **EP 2 088 341 B1**
(45) Date of publication and mention of the grant of the patent: **13.02.2013**
(21) Application number: 07832023.1
(22) Date of filing: 16.11.2007
(51) Int. Cl.: F16C 33/24, B22F 7/00, B32B 15/04, F16C 33/16

(54) **MULTILAYER SLIDING MEMBER AND METHOD FOR MANUFACTURING THE SAME**
Mehrlagiges Gleitelement und Herstellungsverfahren dafür
ÉLÉMENT COULISSANT MULTICOUCHE ET PROCÉDÉ POUR LE FABRIQUER

(30) Priority: 16.11.2006 JP 2006310634
(43) Date of publication of application: 12.08.2009
(73) Proprietor: Oiles Corporation, Tokyo 105-8584 (JP)
(72) Inventor: KUGO, Masafumi, Fujisawa-shi Kanagawa 252-0811 (JP); SEKINE, Toshihiko, Fujisawa-shi Kanagawa 252-0811 (JP)
(74) Representative: Schaumburg, Thoenes, Thurn, Landskron, Eckert
(86) International application number: PCT/JP2007/072293
(87) International publication number: WO 2008/059962

(56) References cited:
- JP-A- 05 214 355
- JP-A- 08 165 420
- JP-A- 10 204 282
- JP-A- 11 030 238
- JP-A- 11 302 487
- JP-A- 2000 141 544
- JP-A- 2004 263 824
- US-A- 4 559 248
- US-A- 5 229 198
- US-A- 5 732 322
- US-B2- 7 118 808

## Description

### [Technical Field]

The present invention relates to a multi-layered sliding member, and particularly to a multi-layered sliding member suitable for applications under high temperatures to which lubricating oils or synthetic resins are not adoptable, and a method of manufacturing the same.

### [Background Art]

There have conventionally been a lot of proposals of multi-layered sliding members, each of which is composed of a steel sheet, a porous sintered metal layer integratedly bonded to the surface of the steel sheet, and a sliding layer composed of a synthetic resin, formed so as to fill pores of the porous sintered metal layer and to cover the surface of the porous sintered metal layer (such as described in Patent Documents 1 and 2).

As a multi-layered sliding member aimed at applications in higher temperature regions, there has been proposed also a slide sheet component having a metal mesh component such as an expanded metal or wire mesh and an expanded graphite integrated therewith (such as described in Patent Document 3).
[Patent Document 1] Japanese Examined Patent Publication No. S31-2452 (PTFE)
[Patent Document 2] Japanese Laid-Open Patent Publication No. 5-99230 (polyacetal)
[Patent Document 3] Japanese Laid-Open Patent Publication No. 9-317772

### [DISCLOSURE OF THE INVENTION]

### [PROBLEMS TO BE SOLVED BY THE INVENTION]

The former multi-layered sliding member is inevitably limited in the range of application, because the temperature conditions allowing it to operate thereunder are determined by the melting point of the synthetic resin composing the sliding layer, wherein use in a temperature range of 250°C or higher is remote from possible. On the other hand, the latter slide sheet component might preferably be adoptable to sealing components or gaskets, but a problem remains in terms of strength when applied to sliding members such as bearings, allowing only a limited range of applications.

The present invention was conceived after considering the above-described situation, wherein an object of which is to provide a multi-layered sliding member suitable also for applications under high temperatures under which lubricating oils or synthetic resins are not adoptable, and a method of manufacturing the same. [MEANS FOR SOLVING PROBLEMS]

According to the present invention, there is provided a multi-layered sliding member which has a metal mesh component bonded to a back metal so as to be integrated therewith, while placing in between a porous sintered bronze layer bonded so as to be integrated with the surface of the back metal, and has expanded graphite formed so as to fill the openings of the metal mesh component and so as to cover the surface thereof.

According to this sort of multi-layered sliding member, the metal mesh component is tightly bonded to the back metal while placing the porous sintered bronze layer in between, and the expanded graphite is given so as to fill the openings of the metal mesh component, and so as to cover the surface of the metal mesh component, wherein the expanded graphite composing the sliding surface is tightly integrated in the direction of sliding. The multi-layered sliding member is therefore improved in the load carrying capacity, and may exhibit excellent friction and wear characteristics particularly under high temperature conditions, as a result of an synergistic effect combined with heat resistance inherent to the expanded graphite.

In the multi-layered sliding member of the present invention, the back metal may preferably be a copper sheet or a copper alloy sheet, or a steel sheet having a copper plated layer formed on the surface thereof.

In the multi-layered sliding member of the present invention, the metal mesh component may preferably be an expanded metal composed of copper or a copper alloy, or may be a plain weave configured by warp wires (lines) and weft wires (lines) composed of copper or a copper alloy, integratedly bonded at the intersections thereof. Since these metal mesh components are closely bonded to the surfaces thereof with the porous sintered bronze layer bonded to the surface of the back metal, so that there may be no fear of causing nonconformities such as separation of the metal mesh component from the surface of the back metal.

According to the present invention, there is provided also a method of manufacturing a multi-layered sliding member, the method includes uniformly scattering bronze powder over the surface of a back metal to thereby form a bronze powder layer; placing a metal mesh component onto the surface of the bronze powder layer, so as to bring one surface of the metal mesh component into close contact with the bronze powder layer; sintering them at a temperature of 700 to 800°C to thereby form a multi-layered sheet having the back metal and a porous sintered bronze layer and the metal mesh integratedly bonded therein; and placing an expanded graphite sheet having a density of at least 0.05 gf/cm³ on the surface of the metal mesh component of the multi-layered sheet, and then pressurizing them to thereby fill the expanded graphite into the openings of the metal mesh component and to cover the surface of the metal mesh component.

According to this method of manufacturing a multi-layered sliding member, since the expanded graphite sheet placed on the surface of the metal mesh component has a density of at least 0.05 gf/cm³, so that the density of the expanded graphite sheet may be increased by pressurizing, and is densely filled in the openings of the metal mesh component and in the porous sintered bronze layer. As a consequence, the expanded graphite composing a sliding layer may tightly be bonded to the metal mesh component and the porous sintered bronze layer in the direction of sliding.

In the method of manufacturing a multi-layered sliding member of the present invention, as the metal mesh component integratedly bonded to the surface of the back metal, while placing the porous sintered bronze layer in between, adoptable is an expanded metal composed of copper or a copper alloy, or a plain weave configured by warp wires (lines) and weft wires (lines) composed of copper or a copper alloy, integratedly bonded at the intersections thereof.

The multi-layered sliding member of the present invention is composed of the back metal, the porous sintered bronze layer which integratedly bonded to the surface of the back metal, the metal mesh component integratedly bonded to the surface of the porous sintered bronze layer, and the expanded graphite given so as to fill the openings of the metal mesh component and so as to cover the surface of the metal mesh component, wherein the multi-layered sliding member may be used as a sliding member while keeping the sheet form thereof unchanged, or may be used in a form of so-called wound bush cylindrically wound up so as to enclose the expanded graphite inside.

### [ADVANTAGE OF THE INVENTION]

According to the present invention, the metal mesh component is tightly bonded to the back metal while placing the porous sintered bronze layer in between, and the expanded graphite is given so as to fill the openings of the metal mesh component, and so as to cover the surface of the metal mesh component, so that the expanded graphite composing the sliding surface is tightly integrated in the direction of sliding. The present invention may, therefore, provide a multi-layered sliding member improved in the load carrying capacity, and may exhibit excellent friction and wear characteristics particularly under high temperature conditions, under which lubricating oils and synthetic resins are not adoptable, as a result of an synergistic effect combined with heat resistance inherent to the expanded graphite, and may provide a method of manufacturing the same.

### [BEST MODES FOR CARRYING OUT THE INVENTION]

Next, the present invention will further be detailed referring to preferable embodiments illustrated in the attached drawings. Note that the present invention is by no means limited to the embodiments.

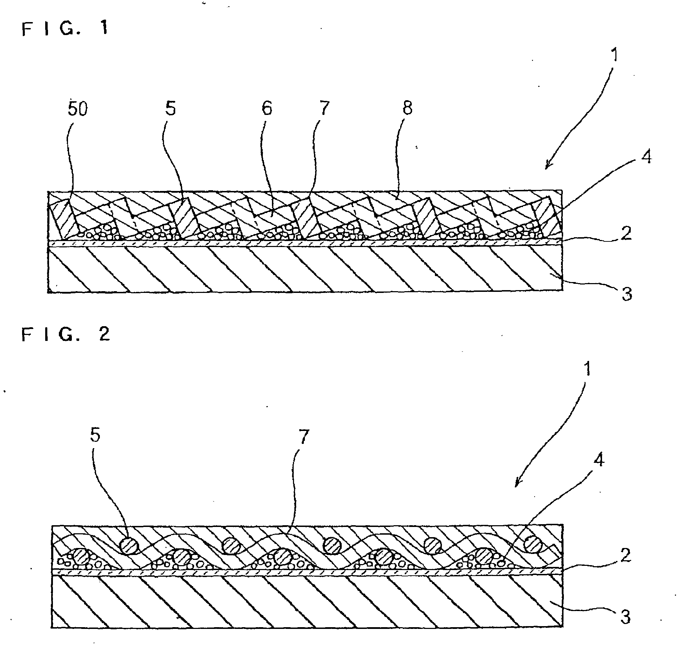

FIG. 1 is a sectional view explaining an embodiment of the present invention, and FIG. 2 is a sectional view explaining an embodiment of another embodiment of the present invention.
As illustrated in FIG. 1 and FIG. 2, a multi-layered sliding member 1 of this embodiment has a steel sheet 3 used as the back metal having a copper plated layer 2 provided to the surface thereof, a porous sintered bronze layer 4 integratedly bonded to the surface of the copper plated layer 2 of the steel sheet 3, a metal mesh component 5 integratedly bonded to the surface of the porous sintered bronze layer 4, and an expanded graphite 8 formed so as to fill the openings 6 of the metal mesh component 5 and so as to cover the surface 7 of the metal mesh component 5.

The copper plated layer 2 on the surface of the steel sheet 3 as the back metal is aimed at improving adhesiveness between the steel sheet 3 and the porous sintered bronze layer 4. For the case where copper or a copper alloy is used for the back metal, the copper plated layer 2 may be omissible. The copper plated layer 2 may be provided by electro-plating.

The bronze for composing the porous sintered bronze layer 4 may be exemplified by copper-tin alloy, phosphor-bronze alloy, lead-bronze alloy and aluminum-bronze alloy, wherein those adjusted in the grain size in the range from 32 to 200 µm may preferably be used. An exemplary method of forming the porous sintered bronze layer 4 on the copper plated layer 2 on the surface of the steel sheet 3 is such as scattering the bronze powder over the copper plated layer 2 uniformly to as thick as 0.2 mm to 0.5 mm, for example, and then sintering the product at a temperature of 760 to 780°C for 60 to 90 minutes, under a pressure of 0.1 to 0.5 MPa in a heating oven conditioned to have a reductive atmosphere, together with the metal mesh component 5 explained below. Note that "porous" in the context of the present invention means a state of exhibiting a porosity of typically 40 to 45%.

As the metal mesh component 5 integratedly bonded to the porous sintered bronze layer 4 integratedly bonded to the surface of the steel sheet 3 while placing the copper plated layer 2 in between, an expanded metal (FIG. 1) composed of copper or a copper alloy, or a plain weave (FIG. 2) configured by warp wires (lines) and weft wires (lines) composed of copper or a copper alloy, integratedly bonded at the intersections thereof, may be adoptable. Since these metal mesh components 5 may be brought into close contact, on one surface thereof, with the porous sintered bronze layer 4 and integratedly bonded thereto, so that a large adhesiveness may be ensured between the metal mesh components 5 and the porous sintered bronze layer 4, so that there may be no fear of causing nonconformities such as separation of the metal mesh components 5 from the surface of the steel sheet 3 used as the back metal.

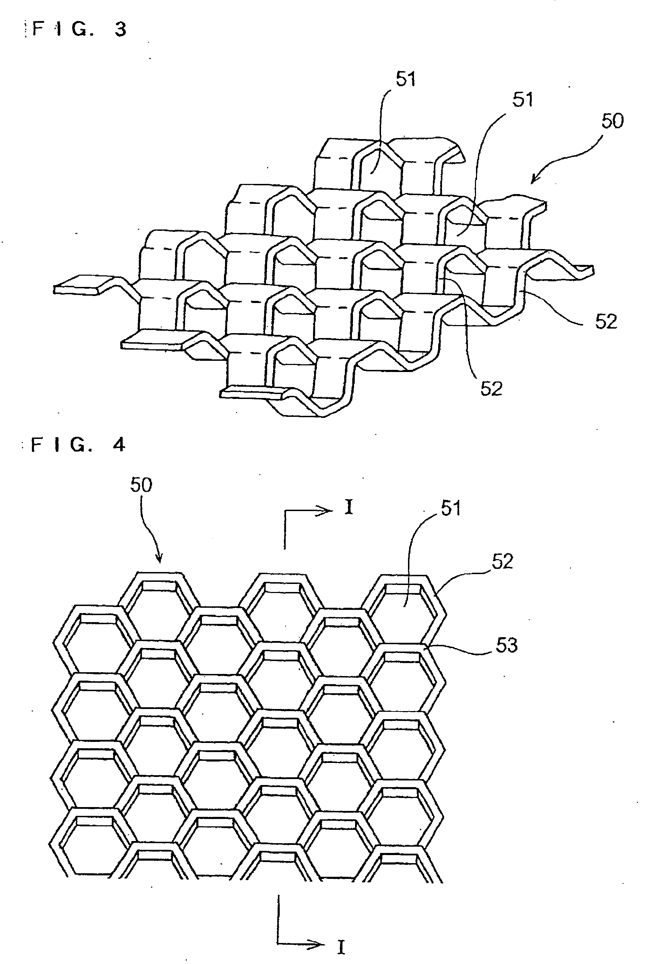

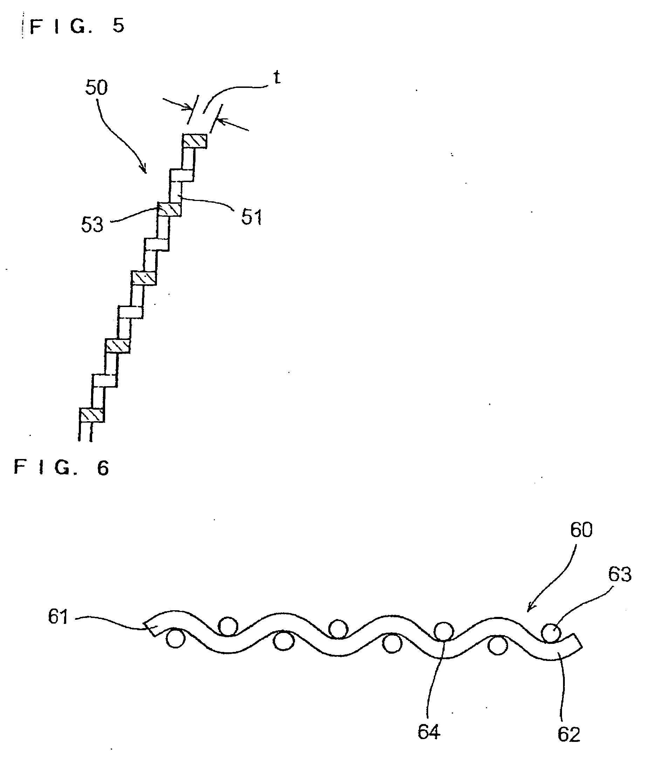

The expanded metal used as the metal mesh component 5 is obtained by inserting a copper or copper alloy sheet between a fixed lower die having a straight cutting edge and a movable upper die typically having a wavy, trapezoidal or triangular cutting edge, in the direction normal to, or inclined away from the cutting edge of the fixed lower die, and by allowing the movable upper die to reciprocate in the vertical direction to thereby slit the copper or copper alloy sheet, and simultaneously expanding the slits so as to form regularly-arranged openings. FIG. 3 to FIG. 5 illustrate an expanded metal 50, wherein FIG. 3 is a perspective view of the expanded metal illustrated in FIG. 1, FIG. 4 is a plan view explaining the expanded metal illustrated in FIG. 3, and FIG. 5 is a sectional view taken along line I-I in FIG. 3.
In the drawings, reference numeral 51 denotes the openings, reference numeral 52 denotes the individual edges (strands) composing the openings 51, reference numeral 53 denotes interconnects (bonded portions) between the strands 52, and t denotes the thickness of the expanded metal 50. Although the expanded metal 50 illustrated in FIG. 3 to FIG. 5 is such as having hexagonal openings 51, the openings may be formed to have diagonal, square, or other polygonal geometry, by altering the profile of the cutting edge of the movable upper die as described in the above.

The copper metal adoptable to compose the expanded metal 50 include bronze, phosphor bronze, brass, beryllium copper, nickel silver, and aluminum bronze. The expanded metal 50 preferably adoptable herein may have a thickness (thickness of the expanded metal before processed) of 0.1 to 1.5 mm, and a length of the individual edges 52 (strands) of 0.1 to 1.5 mm.

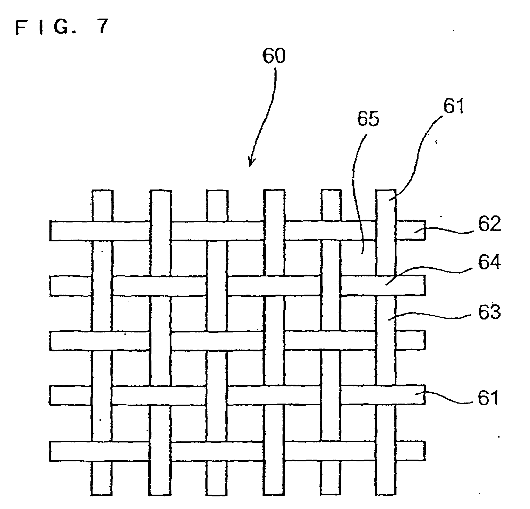

FIG. 6 is a sectional view explaining the plain weave illustrated in FIG. 2, and FIG. 7 is a plan view explaining the plain weave illustrated in FIG. 6. The plain weave 60 used as the metal mesh component 5 is configured by plainly weaving wire components 61 composed of copper or a copper alloy, respectively as the warp wires (lines) 62 and the weft wires (lines) 63 as illustrated in FIG. 6 and FIG. 7, wherein the warp wires 62 and the weft wires 63 are thermally welded with each other at the intersections 64. The wire components 61 composed of a copper alloy include those composed of bronze, phosphor bronze, brass, beryllium copper, nickel silver, aluminum bronze and so forth, wherein the diameter of the wire components 61 may preferably be 0.1 to 1.5 mm, and openings 65 may preferably have a square geometry having a length of each edge of 0.5 to 1.5 mm.

The expanded graphite 8 may be obtained by treating graphite, such as natural graphite, kish graphite, pyrolytic graphite or the like, with a strong oxidizer such as concentrated sulfuric acid, concentrated nitric acid, concentrated sulfuric acid combined with potassium chlorate, concentrated sulfuric acid combined with potassium nitrate, or hydrogen peroxide, and bromine or a halide such as aluminum chloride, to thereby form an intercalation compound; and by rapidly heating the graphite particles (acid-treated graphite) thus formed into the intercalation compound, typically at a temperature as high as 950°C or above for 1 to 10 seconds, to thereby produce a decomposition gas, by the pressure of which the inter-plain distance of graphite is expanded. Although thus formed expanded graphite (particles) may be used without modification, it may generally be used in a form of sheet obtained by compressing or rolling the expanded graphite under the presence or absence of a binder, because of its large bulk density and poor handlability.

The expanded graphite 8 is formed so as to fill the openings of the metal mesh component 5 integratedly bonded to the porous sintered bronze layer 4, and so as to cover the surface 7 of the metal mesh component 5. The expanded graphite 8 formed so as to fill the openings of the metal mesh component 5 and so as to cover the surface 7 of the metal mesh component 5 serves as a sliding layer, has heat resistance, excellent in compatibility with materials to be brought into contact therewith, distinctively improved in the impact strength, and may exhibit excellent friction and wear characteristics particularly for applications under high temperature conditions under which lubricating oils and synthetic resins are not adoptable.

The above-described, multi-layered sliding member 1 may be used as a sliding member while keeping the sheet form thereof unchanged, or may be used in a form of so-called wound bush cylindrically wound up so as to enclose the expanded graphite 8 inside.

Next, an exemplary method of manufacturing the multi-layered sliding member 1 will be explained.

### Manufacturing of Multi-Layered Sheet

As the back metal, the steel sheet (cold-rolled steel sheet SPCC) 3 of 0.5 to 1.5 mm thick, having the copper plated layer 2 of 20 to 50 µm thick formed thereon, is obtained. Over the surface of the copper plated layer 2 of the steel sheet 3, bronze (90 wt% copper, 10 wt% tin) powder having irregular geometry with a grain size of 45 µm or smaller was scattered to a uniform thickness. A copper sheet or a copper alloy sheet of 0.1 to 1.5 mm is expanded to thereby form the expanded metal 50 having regularly-arranged equilateral hexagonal openings with a length of each edge (strand) 52 of 0.1 to 1.5 mm. The expanded metal 50 is stacked on the bronze powder layer which was scattered to a uniform thickness over the steel sheet 3 while placing the copper plated layer 2 in between.

Next, the steel sheet 3 having the copper plated layer 2 formed thereon, the bronze powder layer scattered to a uniform thickness over the surface of the copper plated layer 2, and the expanded metal 50 stacked on the bronze powder layer are sintered at a temperature of 700 to 800°C for 60 to 90 minutes, under pressure in a heating oven conditioned to have a reductive atmosphere.

By the sintering, the multi-layered sheet composed of the porous sintered bronze layer 4 integratedly bonded to the surface of the steel sheet 3 while placing the copper plated layer 2 in between, and the expanded metal 50 integratedly bonded to the porous sintered bronze layer 4, is formed.

### Manufacturing of Expanded Graphite Sheet

Three hundred parts by weight of a 98% concentrated sulfuric acid kept under stirring is added with 5 parts by weight of a 60% aqueous solution of hydrogen peroxide as an oxidizer, to obtain a reaction solution. The reaction solution is cooled and kept at 10°C, added with a flake natural graphite powder having a grain size of 30 to 80 mesh, and stirred for 30 minutes. After the reaction, the acid-treated graphite is separated by suction filtration, and then washed by two cycles of process which includes washing with 300 parts by weight of water under stirring for 10 minutes, followed by suction filtration, so as to thoroughly remove the sulfuric acid content from the acid-treated graphite. Next, the acid-treated graphite from which the sulfuric acid content was thoroughly removed is dried for 3 hours in a drying oven kept at 110°C, to obtain an acid-treated raw graphite. The acid-treated raw graphite is expanded at 1000°C for 5 seconds, so as to allow a decomposition gas to produce, by the pressure of which the inter-plain distance of graphite is expanded to form the expanded graphite particles (factor of expansion of 240). The expanded graphite particles are rolled using a twin-roller machine, to thereby manufacture an expanded graphite sheet having a density of at least 0.05 gf/cm³, preferably from 0.5 to 1.0 gf/cm³.

### Manufacturing of Multi-Layered Sliding member

The expanded graphite sheet is placed on the surface of the expanded metal 50 on the surface of the multi-layered sheet, and then pressurized under a pressure of 100 to 130 MPa by a press machine or press roller, to thereby manufacture a multi-layered sliding member 1 on which a sliding layer, composed of the expanded graphite 8 formed so as to fill the openings 51 of the expanded metal 50 and to cover the surface of the expanded metal 50, is formed. The thickness of the sliding layer may be exemplified as 0.03 to 0.1 mm.

Although the expanded metal 50 was used as the metal mesh component 5 in the above-described method of manufacturing the multi-layered sliding member 1, a method of manufacturing as described below may be adoptable if a plain weave 60 is adopted in place of the expanded metal 50.

Wire components 61 composed of copper or a copper alloy, having a diameter of 0.1 to 1.5 mm, are obtained, and then plainly woven while using them as warp wires (lines) 62 and weft wires (lines) 63, to thereby manufacture the plain weave 60 having square openings 65 having a length of each edge of 0.5 to 1.5 mm. The individual intersections 64 of the plain weave 60 are thermally welded under pressure in a heating oven conditioned to have a reductive atmosphere. By welding and integrating the individual intersections 64 of the plain weave 60, the warp wires (lines) 62 and the weft wires (lines) 63 will no more dislocate at the intersections 64, and thereby the retention of the sliding layer, composed of the expanded graphite 8 formed so as to fill the openings 65 of the plain weave 60 and to cover the surface of the plain weave 60, may be improved. Thereafter, the multi-layered sliding member 1 is manufactured by a method similar to that described in the above.

### [Examples]

The present invention will further be detailed referring to Examples below, but will not be limited thereto within the scope and spirit of the present invention.

### Example 1

A steel sheet (cold-rolled steel sheet SPCC) of 1.0 mm thick, having a copper plated layer of 30 µm thick formed on the surface thereof, was obtained. Over the surface of the copper plated layer of the steel sheet, bronze (90 wt% copper, 10 wt% tin) powder having a grain size adjusted to 45 µm was scattered to a uniform thickness (0.3 mm), to thereby form a bronze powder layer.

A phosphor bronze sheet of 0.3 mm thick was expanded to manufacture an expanded metal of 0.43 mm thick, having regularly-arranged equilateral hexagonal openings having a length of each edge (strand) of 0.6 mm.

The expanded metal was placed on the surface of the bronze powder layer formed on the surface of the steel sheet while placing the copper plated layer in between, and sintered at 780°C for 1 hour, under pressure (0.1 MPa) in a heating oven conditioned to have a reductive atmosphere, to thereby form a multi-layered sheet composed of the steel sheet, the porous sintered bronze layer integratedly bonded to the surface of the steel sheet while placing the copper plated layer in between, and the expanded metal integratedly bonded to the porous sintered bronze layer.

The expanded graphite particles characterized by a factor of expansion of 240 were rolled using a twin-roller machine, to thereby manufacture an expanded graphite sheet having a density of at least 0.5 gf/cm³, and a thickness of 1.0 mm.

The expanded graphite sheet was placed on the surface of the expanded metal of the multi-layered sheet, and rolled under a pressure of 128 MPa, to thereby form a sliding layer composed of the expanded graphite formed so as to fill the openings of the expanded metal and so as to cover the surface of the expanded metal. The product was processed into a square piece having a length of each edge of 30 mm, named multi-layered sliding member "A".

### Example 2

A steel sheet (cold-rolled steel sheet SPCC) of 1.0 mm thick, having a copper plated layer of 30 µm thick formed on the surface thereof, was obtained. Over the surface of the copper plated layer of the steel sheet, bronze (90 wt% copper, 10 wt% tin) powder having a grain size adjusted to 45 µm was scattered to a uniform thickness (0.3 mm), to thereby form a bronze powder layer.

Wire components composed of phosphor bronze having a diameter of 0.5 mm were obtained, and then plainly woven while using them as warp wires (lines) and weft wires (lines), to thereby manufacture a plain weave having square openings having a length of each edge of 0.6 mm. The individual intersections of the plain weave were thermally welded under pressure (0.1 MPa) in a heating oven conditioned to have a reductive atmosphere.

Thereafter, the sliding layer composed of the expanded graphite formed so as to fill the openings of the plain weave and so as to cover the surface of the plain weave was formed, by a method similar to that described in Example 1. The product was processed into a square piece having a length of each edge of 30 mm, named multi-layered sliding member "B".

### Comparative Example

A sheet composed of a class-4, high-strength cast brass having a thickness of 5 mm, and a length of edge of 30 mm was obtained, nine circular holes are formed in the sheet, and cylindrical solid lubricant composed of graphite was filled and fixed in each circular hole, named sliding member "C". The ratio of area of the solid lubricant relative to the area of slide surface (surface of the sliding member) was 28.3%.

The multi-layered sliding members of Examples 1 and 2, and the sliding member of Comparative Example were subjected to thrust test to investigate frictional coefficient and amount of wear, under test conditions shown in Table 1. Results of the thrust test are shown in Table 2.

**[Table 1]**

| Test Conditions | |
|---|---|
| Load: | 1.9 MPa (20 kgf/cm²) |
| Speed: | 0.03 m/sec(2 m/min) |
| Ambient temperature: | 300°C |
| Material to be opposed: | SUS303 |
| Lubricant: | none |
| Test duration: | 8 hours |
| Test mode: | thrust test against rotating opposite component |

**[Table 2]**

| | | Examples | | Comparative Example |
|---|---|---|---|---|
| | | Multi-layered sliding member A | Multi-layered sliding member B | Sliding member C |
| Frictional coefficient | Early stage of sliding | 0.13 | 0.14 | 0.15 |
| | Steady state | 0.06 | 0.06 | unstable |
| Amount of wear of sliding member (µm) | | 19 | 22 | 387 |
| Amount of wear of opposite component (µm) | | 0 | 0 | 36 |

As is clear from the test results, the multi-layered sliding members A and B of Example 1 and Example 2 were found to show excellent friction and wear characteristics under the high-temperature condition characterized by an ambient temperature of 300°C, whereas the sliding member C of Comparative Example was found to show frictional coefficient remained unstable over the test duration, and show a distinctively large value of amount of wear.

### [INDUSTRIAL APPLICABILITY]

The multi-layered sliding member of the present invention is suitable in particular for applications under high temperatures under which lubricating oils and synthetic resins are not adoptable.

### [BRIEF DESCRIPTION OF THE DRAWINGS]

[FIG. 1] A sectional view explaining an embodiment of the present invention.
[FIG. 2] A sectional view explaining another embodiment of the present invention.
[FIG. 3] A perspective view of the expanded metal shown in FIG. 1.
[FIG. 4] A plan view explaining the expanded metal shown in FIG. 3.
[FIG. 5] A sectional view taken along line I-I in FIG. 3.
[FIG. 6] A sectional view explaining the plain weave illustrated in FIG. 2.
[FIG. 7] A plan view explaining the plain weave illustrated in FIG. 6.

### [EXPLANATION OF THE MARKS]

- 1: MULTI-LAYERED SLIDING MEMBER
- 2: COPPER PLATED LAYER
- 3: STEEL SHEET
- 4: POROUS SINTERED BRONZE LAYER
- 5: METAL MESH COMPONENT
- 6: OPENING
- 7: SURFACE
- 8: EXPANDED GRAPHITE
- 50: EXPANDED METAL
- 60: PLAIN WEAVE

## Claims

1. A multi-layered sliding member (1) having a metal mesh component bonded to a back metal (3) so as to be integrated therewith, **characterized by** placing in between a porous sintered bronze layer (4) bonded so as to be integrated with the surface of the back metal (3), and having expanded graphite (50) formed so as to fill the openings of said metal mesh component (5) and so as to cover the surface thereof.

2. The multi-layered sliding member (1) as claimed in Claim 1, wherein said back metal (3) is a copper sheet or a copper alloy sheet.

3. The multi-layered sliding member (1) as claimed in Claim 1, wherein said back metal (3) is composed of a steel sheet, and a copper plated layer (2) formed on the surface of said steel sheet.

4. The multi-layered sliding member as claimed in any one of Claims 1 to 3, wherein said metal mesh component (5) is an expanded metal composed of copper or a copper alloy.

5. The multi-layered sliding member as claimed in any one of Claims 1 to 3, wherein said metal mesh component (5) is a plain weave (60) configured by warp wires (62) and weft wires (63) composed of copper or a copper alloy, integratedly bonded at the intersections thereof.

6. A method of manufacturing a multi-layered sliding member (1), **characterized by** uniformly scattering bronze powder over the surface of a back metal (3) to thereby form a bronze powder layer; placing a metal mesh component (5) onto the surface of the bronze powder layer, so as to bring one surface of said metal mesh component (5) into close contact with said bronze powder layer; sintering them at a temperature of 700 to 800°C to thereby form a multi-layered sheet having said back metal (3) and a porous sintered bronze layer (4) and the metal mesh integratedly bonded therein; and placing an expanded graphite sheet having a density of at least 0.05 gf/cm³ on the surface of said metal mesh component (5) of said multi-layered sheet, and then pressurizing them to thereby fill the expanded graphite into the openings of said metal mesh component (5) and to cover the surface of said metal mesh component (5).

7. The method of manufacturing a multi-layered sliding member (1) as claimed in Claim 6, wherein said back metal (3) is a copper sheet or a copper alloy sheet.

8. The method of manufacturing a multi-layered sliding member (1) as claimed in Claim 6, wherein said back metal (3) is composed of a steel sheet, and a copper plated layer (2) formed on the surface of said steel sheet.

9. The method of manufacturing a multi-layered sliding member as claimed in any one of Claims 6 to 8, wherein said metal mesh component (5) is an expanded metal composed of copper or a copper alloy.

10. The method of manufacturing a multi-layered sliding member (1) as claimed in any one of Claims 6 to 8, wherein said metal mesh component (5) is a plain weave (60) configured by warp wires (62) and weft wires (63) composed of copper or a copper alloy, integratedly bonded at the intersections thereof.

## Patentansprüche

1. Mehrlagiges Gleitelement (1) mit einem Metallgewebe-Bestandteil, der an ein Grundmetall (3) gebunden ist, so dass er mit diesem eine Einheit bildet, **gekennzeichnet durch** eine dazwischen angeordnete poröse, gesinterte Bronzeschicht (4), die so gebunden ist, dass sie eine Einheit mit der Oberfläche des Grundmetalls (3) bildet, und expandiertes Graphit (50), das so gebildet ist, dass es die Öffnungen des Metallgewebe-Bestandteils (5) füllt und dessen Oberfläche bedeckt.

2. Mehrlagiges Gleitelement (1) nach Anspruch 1, wobei das Grundmetall (3) ein Kupferblech oder ein Kupferlegierungsblech ist.

3. Mehrlagiges Gleitelement (1) nach Anspruch 1, wobei das Grundmetall (3) aus einem Stahlblech und einer auf der Oberfläche des Stahlblechs gebildeten verkupferten Schicht (2) besteht.

4. Mehrlagiges Gleitelement nach einem der Ansprüche 1 bis 3, wobei der Metallgewebe-Bestandteil (5) ein Streckmetall ist, das aus Kupfer oder einer Kupferlegierung besteht.

5. Mehrlagiges Gleitelement (1) nach einem der Ansprüche 1 bis 3, wobei der Metallgewebe-Bestandteil (5) eine Grundbindung (60) ist, die aus Kupfer oder einer Kupferlegierung bestehenden Kettendrähten (62) und Schussdrähten (63) aufgebaut ist, die an ihren Schnittpunkten zu einer Einheit gebunden sind.

6. Verfahren zur Herstellung eines mehrlagigen Gleitelements (1), **gekennzeichnet durch** gleichmäßiges Streuen von Bronzepulver über die Oberfläche des Grundmetalls (3), um **dadurch** eine Bronzepuder-Schicht zu bilden; Anordnen eines Metallgewebe-Bestandteils (5) auf der Oberfläche der Bronzepuder-Schicht, um eine Oberfläche des Metallgewebe-Bestandteils (5) in engen Kontakt mit der Bronzepuder-Schicht zu bringen; Sintern derselben bei einer Temperatur von 700 bis 800°C, um **dadurch** ein mehrlagiges Blech mit dem Grundmetall (3) und einer porösen, gesinterten Bronzeschicht (4) und dem darin als einheitlich gebundenen Metallgewebe zu bilden; und Anordnen einer Schicht aus expandiertem Graphit mit einer Dichte von mindestens 0,05 gf/cm³ auf der Oberfläche des Metallgewebe-Bestandteils (5) des mehrschichtigen Blechs, und dann unter Druck setzen derselben, um **dadurch** das expandierte Graphit in die Öffnungen des Metallgewebe-Bestandteils (5) zu füllen und die Oberfläche des Metallgewebe-Bestandteils (5) zu bedecken.

7. Verfahren zur Herstellung eines mehrlagigen Gleitelements (1) nach Anspruch 6, wobei das Grundmetall (3) ein Kupferblech oder ein Kupferlegierungsblech ist.

8. Verfahren zur Herstellung eines mehrlagigen Gleitelements (1) nach Anspruch 6, wobei das Grundmetall (3) aus einem Stahlblech und einer an der Oberfläche des Stahlblechs gebildeten verkupferten Schicht (2) besteht.

9. Verfahren zur Herstellung eines mehrlagigen Gleitelements nach einem der Ansprüche 6 bis 8, wobei der Metallgewebe-Bestandteil (5) ein Streckmetall ist, das aus Kupfer oder einer Kupferlegierung besteht.

10. Verfahren zur Herstellung eines mehrlagigen Gleitelements (1) nach einem der Ansprüche 6 bis 8, wobei der Metallgewebe-Bestandteil (5) eine Grundbindung (60) ist, die aus Kupfer oder einer Kupferlegierung bestehenden Kettendrähten (62) und Schussdrähten (63) aufgebaut ist, die an ihren Schnittpunkten zu einer Einheit gebunden sind.

## Revendications

1. Elément de coulissement multicouche (1) ayant un composant de treillis métallique collé sur un métal support (3) de manière à être intégré à celui-ci, caractérisé en plaçant entre eux une couche poreuse de bronze fritté (4) collée de manière à être intégrée à la surface du métal support (3), et présentant du graphite expansé (50) formé de manière à remplir les ouvertures dudit composant de treillis métallique (5) et de manière à couvrir la surface de celui-ci.

2. Elément de coulissement multicouche (1) selon la revendication 1, dans lequel, ledit métal support (3) est une feuille de cuivre ou une feuille d'un alliage de cuivre.

3. Elément de coulissement multicouche (1) selon la revendication 1, dans lequel ledit métal support est composé d'une feuille d'acier, et d'une couche de placage de cuivre (2) formée sur la surface de ladite feuille d'acier.

4. Elément de coulissement multicouche selon l'une quelconque des revendications 1 à 3, dans lequel ledit composant de treillis métallique (5) est un métal expansé composé de cuivre ou d'un alliage de cuivre.

5. Elément de coulissement multicouche selon l'une quelconque des revendications 1 à 3, dans lequel ledit composant de treillis métallique (5) est une armure tissée (60) configurée par des fils de chaine (62) et des files de trame (63) composés de cuivre ou d'un alliage de cuivre, collés de manière à être intégrés ensemble au niveau de leurs intersections.

6. Procédé de fabrication d'un élément de coulissement multicouche (1), **caractérisé par** une dispersion uniforme d'une poudre de bronze sur la surface d'un métal support (3) afin de former ainsi une couche de poudre de bronze ; par le fait de placer un composant de treillis métallique (5) sur la surface de la couche de poudre de bronze, de manière à amener une surface dudit composant de treillis métallique (5) en contact rapproché avec ladite couche de poudre de bronze ; par le fait de fritter ceux-ci à une température comprise entre 700 et 800 °C afin de former ainsi une feuille multicouches ayant ledit métal support (3) et une couche poreuse de bronze fritté (4) et le treillis métallique collés de manière à être intégrés ensemble ; et par le fait de placer une feuille de graphite expansé ayant une densité d'au moins 0,05 gf/cm³ sur la surface dudit composant de treillis métallique (5) de ladite feuille multicouche, puis à mettre celles-ci sous pression afin de remplir ainsi du graphite expansé les ouvertures dudit composant de treillis métallique (5) et de couvrir la surface dudit composant de treillis métallique (5).

7. Procédé de fabrication d'un élément de coulissement multicouche (1) selon la revendication 6, dans lequel ledit métal support (3) est une feuille de cuivre ou une feuille d'un alliage de cuivre.

8. Procédé de fabrication d'un élément de coulissement multicouche (1) selon la revendication 6, dans lequel ledit métal support (3) est constitué d'une feuille d'acier, et d'une couche de placage de cuivre (2) formée sur la surface de ladite feuille d'acier.

9. Procédé de fabrication d'un élément de coulissement multicouche (1) selon l'une quelconque des revendications 6 à 8, dans lequel ledit composant de treillis métallique (5) est un métal expansé composé de cuivre ou d'un alliage de cuivre.

10. Procédé de fabrication d'un élément de coulissement multicouche (1) selon l'une quelconque des revendications 6 à 8, dans lequel ledit composant de treillis métallique (5) est une armure tissée (60) configurée par des fils de chaine (62) et des fils de trame (63) composés de cuivre ou d'un alliage de cuivre, collés de manière à être intégrés ensemble au niveau de leurs intersections.
